# EUROPEAN PATENT APPLICATION

(11) **EP 4 383 803 A1**
(43) Date of publication of application: **12.06.2024**
(21) Application number: 21952834.6
(22) Date of filing: 05.08.2021
(51) Int. Cl.: H04W 28/04

(54) **TERMINAL, BASE STATION, AND FEEDBACK METHOD**

(71) Applicant: NTT DOCOMO, INC., Tokyo 100-6150 (JP)
(72) Inventor: OKANO, Mayuko, Tokyo 100-6150 (JP); SHIBAIKE, Naoya, Tokyo 100-6150 (JP); HARADA, Hiroki, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/029236
(87) International publication number: WO 2023/013010

(57) **Abstract**

A terminal includes: a control unit configured to generate feedback information including first feedback information for control information that performs scheduling for a single downlink shared channel and second feedback information for control information that performs scheduling for a plurality of downlink shared channels; and a transmission unit configured to transmit the feedback information in uplink.

## Description

### Technical Field

The present invention relates to a terminal, a base station, and a feedback method in a radio communication system.

### Background Art

In NR (New Radio) (also referred to as "5G") which is a successor system of LTE (Long Term Evolution), techniques for satisfying requirements such as a large-capacity system, a high-speed data transmission rate, low delay, simultaneous connection of a large number of terminals, low cost, and power saving have been studied. In addition, in NR, use of a high-frequency band such as 52.6 to 114.25GHz is being studied.

Also, in the NR system, in order to expand frequency bands, use of frequency bands (also referred to as unlicensed bands, unlicensed carriers, or unlicensed CCs) that are different from frequency bands (licensed bands) licensed to communication operators is supported.

### Related Art Document

### Non-Patent Documents

### Non-Patent Document 1: 3GPP TS 38.213 V16. 6.0 (2021-06) SUMMARY OF THE INVENTION

### Problems to be Solved by the Invention

If the slot length is shortened due to use of a high frequency band, the base station is expected to schedule a plurality of PDSCHs for a terminal by one piece of control information (DCI).

However, in the related technique described in Non-Patent Document 1 and the like, when a plurality of PDSCHs are scheduled by one DCI, how to generate feedback information (specifically, HARQ-ACK information) is not defined, and there is a possibility that feedback information cannot be generated properly in the related technique.

The present invention has been made in view of the above, and it is an object of the present invention to provide a technique that enables a terminal to properly generate feedback information when a plurality of PDSCHs are scheduled by one piece of control information.

### Means for Solving the Problems

According to the disclosed technique, there is provided a terminal including:
a control unit configured to generate feedback information including first feedback information for control information that performs scheduling for a single downlink shared channel and second feedback information for control information that performs scheduling for a plurality of downlink shared channels; and
a transmission unit configured to transmit the feedback information in uplink.

### Effects of the Invention

According to the disclosed technique, a technique is provided that enables a terminal to generate feedback information properly when a plurality of PDSCHs are scheduled by one piece of control information.

### Brief Description of the Drawings

[FIG. 1] FIG. 1 is a diagram for explaining a radio communication system according to an embodiment of the present invention;
[FIG. 2] FIG. 2 is a diagram for explaining a radio communication system according to an embodiment of the present invention;
[FIG. 3] FIG. 3 is a diagram showing an example of a band;
[FIG. 4] FIG. 4 is a diagram showing a relationship between SCS and symbol duration
[FIG. 5] FIG. 5 is a diagram for explaining a method of generating an R16 Type 2 HARQ-ACK CB;
[FIG. 6] FIG. 6 is a diagram showing a configuration of an R16 Type 2 HARQ-ACK CB;
[FIG. 7] FIG. 7 is a diagram showing an example of a basic procedure in an embodiment of the present invention;
[FIG. 8] FIG. 8 is a diagram for explaining Example 1;
[FIG. 9] FIG. 9 is a diagram for explaining Example 1;
[FIG. 10] FIG. 10 is a diagram for explaining Example 1;
[FIG. 11] FIG. 11 is a diagram for explaining Example 1;
[FIG. 12] FIG. 12 is a diagram for explaining Example 2;
[FIG. 13] FIG. 13 is a diagram for explaining Example 3;
[FIG. 14] FIG. 14 is a diagram for explaining Example 3;
[FIG. 15] FIG. 15 is a diagram for explaining Example 3;
[FIG. 16] FIG. 16 is a diagram for explaining Example 3;
[FIG. 17] FIG. 17 is a diagram showing an example of a functional configuration of a base station 10 according to the embodiment of the present invention;
[FIG. 18] FIG. 18 is a diagram showing an example of a functional configuration of a terminal 20 according to an embodiment of the present invention;
[FIG. 19] FIG. 19 is a diagram showing an example of a hardware configuration of the base station 10 or the terminal 20 according to an embodiment of the present invention;
[FIG. 20] FIG. 20 is a configuration diagram of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to an embodiment of the present invention, existing techniques are used as appropriate. The existing technology is, for example, existing NR. The radio communication system (the base station 10 and the terminal 20) according to the present embodiment basically operates in accordance with an existing specification (e.g., Non-Patent Document 1). However, in order to solve the problem in the case where use of a high frequency band is assumed, the base station 10 and the terminal 20 also perform operations that are not included in the existing specification. In the description of Examples to be described later, operations that are not defined in the existing specifications are mainly described. Note that numerical values described below are all examples.

Also, in the embodiments of the present invention, the duplex scheme may be a time division duplex (TDD) scheme, a frequency division duplex (FDD) scheme, or another scheme (for example, flexible duplex).

In the embodiments of the present invention, "configuring" a radio parameter or the like may mean that a predetermined value is pre-configured or that a radio parameter notified from the base station 10 or the terminal 20 is configured.

### (System Configuration)

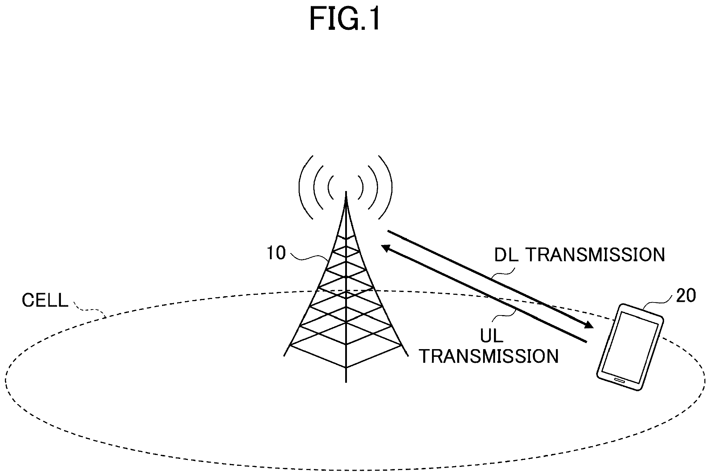

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency domain, at least 15kHz, 30kHz, 120kHz, and 240kHz are supported as subcarrier spacing (SCS). Further, a resource block is formed with a predetermined number (for example, 12) of consecutive subcarriers regardless of SCS.

The terminal 20 detects an SSB (SS/PBCH block) when performing initial access, and identifies the SCS for PDCCH and PDSCH based on a PBCH included in the SSB.

In the time domain, a slot is formed with a plurality of OFDM symbols (for example, 14 symbols regardless of subcarrier spacing). Hereinafter, the OFDM symbol is referred to as "symbol". A slot is a scheduling unit. Further, a subframe of a 1ms section is defined, and a frame including 10 subframes is defined. The number of symbols per slot is not limited to 14.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The terminal 20 is a communication device having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

The terminal 20 can perform carrier aggregation in which a plurality of cells (a plurality of component carriers (CCs)) are aggregated to communicate with the base station 10. In the carrier aggregation, one PCell (primary cell) and one or more SCells (secondary cells) are used. Also, a PUCCH-SCell with a PUCCH may be used. Further, a PUCCH group may be configured.

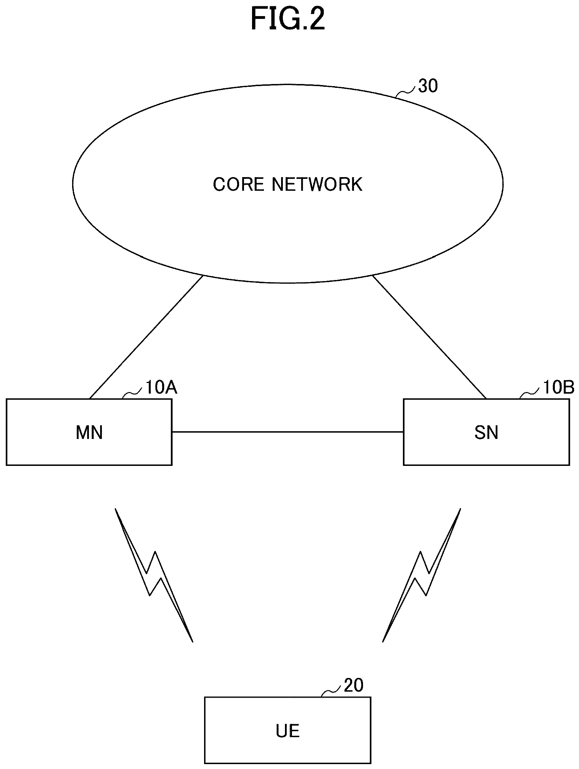

FIG. 2 illustrates a configuration example of a radio communication system in a case where NR-dual connectivity (NR-DC) is executed. As shown in FIG. 2, base stations 10A and 10B are provided as a master node (MN) and a secondary node (SN), respectively. The base stations 10A and 10B are connected to a core network. The terminal 20 communicate with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCell) and one or more SCells. Note that, in the present specification, a CC (component carrier) and a cell may be used synonymously. The PCell and the PSCell may be referred to as an SPCell.

In the radio communication system according to the present embodiment, when an unlicensed band is used, LBT (Listen Before Talk) is executed. The base station 10 or the terminal 20 performs sensing of a signal, performs transmission when a sensing result is idle, and does not perform transmission when the sensing result is busy. Note that LBT is not necessarily performed in the unlicensed band. There may be cases where LBT is not performed in an unlicensed band.

### (On frequency bands)

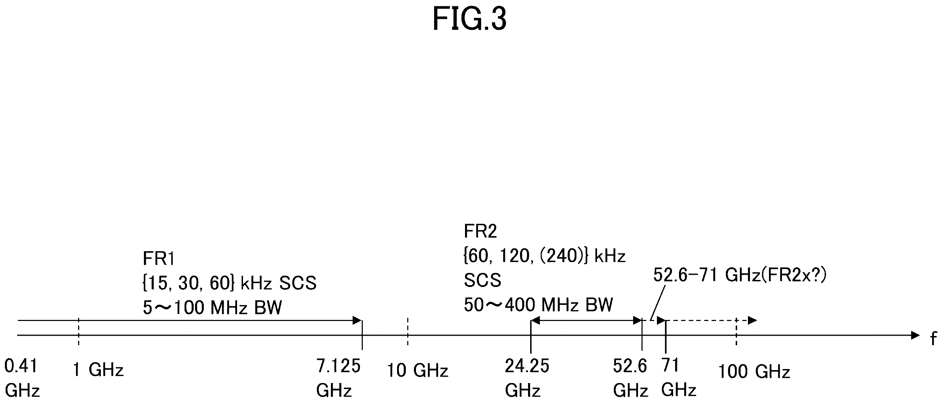

FIG. 3 shows examples of frequency bands used in existing NR and frequency bands used in the radio communication system according to the present embodiment. As frequency bands (which may be referred to as frequency ranges) in the existing NR, there are two frequency bands that are FR1 (0. 41GHz to 7.125GHz) and FR2 (24.25GHz to 52.6GHz). As illustrated in FIG. 3, in FR1, 15kHz, 30kHz, and 60kHz are supported as SCSs, and 5MHz to 100MHz are supported as bandwidths (BW). In FR2, 60kHz, 120kHz, and 240kHz (only SSB) are supported as SCSs, and 50MHz to 400MHz are supported as bandwidths (BW).

The radio communication system according to the present embodiment is assumed to use a frequency band (for example, 52.6GHz to 114.25GHz) higher than 52.6GHz, which is not used in the existing NR. The technique according to the present invention is not limited to application to such a high frequency band, and can be applied to an existing frequency band.

Furthermore, in the present embodiment, it is assumed that an SCS that is wider than an existing SCS is used due to expansion of the frequency band as described above. For example, 480kHz or an SCS wider than 480kHz is used as an SCS for SSB and PDCCH/PDSCH.

In the high frequency band, it is assumed that a large number of narrow beams are used for compensation of a large propagation loss. As an SCS, an SCS (for example, 480kHz or 960kHz) wider than the existing SCS in FR2 is used.

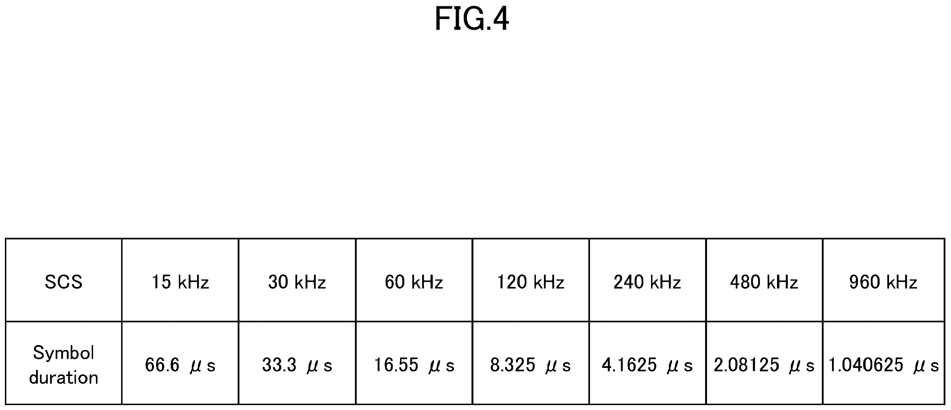

FIG. 4 is a diagram illustrating a relationship between an SCS and a symbol length (a time length of a symbol). As shown in FIG. 4, when the SCS is widened, the symbol duration (time length of the symbol) is shortened. Further, if the number of symbols per slot is constant (i.e., 14 symbols), the slot length decreases as the SCS is widened.

In the radio communication system, in response to data reception via a PDSCH from the base station 10, the terminal 20 transmits, to the base station 10 as a feedback, HARQ-ACK information including a HARQ-ACK codebook (which may be referred to as HARQ-ACK CB) in which a HARQ-ACK information bit value is set. Note that transmitting/receiving data by a PDSCH may be rephrased as transmitting/receiving a PDSCH. Further, information transmitted as feedback to the base station 10 may be referred to as a HARQ-ACK codebook. Generating information to be transmitted to the base station 10 as a feedback may be expressed as generating a HARQ-ACK codebook.

However, as described above, when the slot length is shortened due to use of a high frequency band, it is assumed that a plurality of PDSCHs are scheduled by using one DCI, and it is not clear how to generate a HARQ-ACK CB based on such an assumption in the related art.

In the following, an embodiment on generating a HARQ-ACK CB in a system in which a plurality of PDSCHs can be scheduled by scheduling using one DCI will be described. In the present embodiment, an example of a dynamically generated type 2 HARQ-ACK CB will be described in particular. Hereinafter, scheduling a plurality of PDSCHs by scheduling using one DCI may be referred to as multi-PDSCH scheduling (multiple PDSCH scheduling).

### (Method of generating type 2 HARQ-ACK CB)

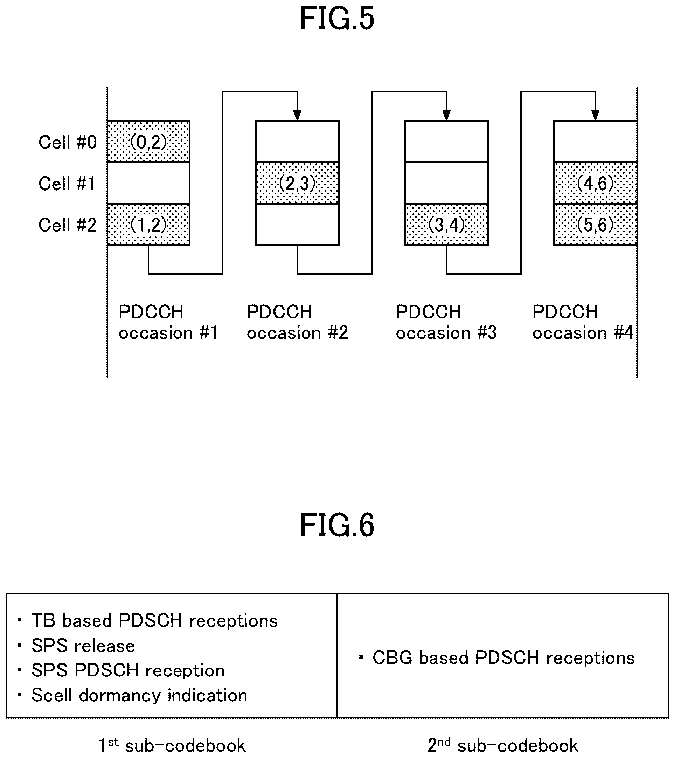

First, a method of generating a type 2 HARQ-ACK CB in Rel. 16 will be described with reference to FIG. 5. Note that, in the system according to the present embodiment, the method of generating a type 2 HARQ-ACK CB in Rel. 16 may be applied to a cell or the like in which scheduling of a plurality of PDSCHs by scheduling using one DCI is not allowed.

In the example of FIG. 5, the terminal 20 receives a DCI in a cell #0 and a cell #2 at a PDCCH occasion #1. The terminal 20 receives a DCI in the cell #1 at a PDCCH occasion #2. The terminal 20 receives a DCI in the cell #2 in a PDCCH occasion #3. The terminal 20 receives a DCI in the cell #1 and the cell #2 in a PDCCH occasion #4.

The value in parentheses in the DCI of FIG. 5 indicates a Downlink Assignment Indicator (Index) (DAI) field. The DAI field includes a counter DAI (cDAI) and a total DAI (tDAI).

The counter DAI is a value obtained by counting transmission DCIs in the order of cell -> PDCCH occasion. The total DAI is the total number of DCIs in PDCCH occasions, and increases as the PDCCH occasions increase.

Based on a bit position based on the counter DAI and the total DAI notified by the DCI, the terminal 20 determines a bit position (a bit position in the type 2 HARQ-ACK CB), and sets HARQ-ACK information in the bit position. By transmitting the HARQ-ACK CB generated in this way to the base station 10, the base station 10 can grasp which PDSCH the HARQ-ACK information corresponds to, and can appropriately perform retransmission and the like.

Note that, even when one PDSCH is transmitted by one DCI, the number of TBs (transport blocks) (or the number of codewords) is, for example, 2 when spatial multiplexing is performed. That is, the number of HARQ-ACK information bits for the DCI is 2. In addition, when spatial bundling is performed, the number of HARQ-ACK information bits is 1 even when the number of TBs is 2. Also, when CBG (Code Block Group) based transmission is performed, ACK/NACK is returned in units of CBGs in a TB, and thus the number of HARQ-ACK information bits is the number of CBGs per TB. From this viewpoint, in Rel-16, the terminal 20 determines the number of HARQ-ACK bits for each PDSCH reception based on the following information elements that the terminal 20 receives from the base station 10.

- maxNrofCodeWordsScheduledByDCI
- harq-ACK-SpatialBundlingPUCCH
- PDSCH-CodeBlockGroupTransmission

### (On CBG)

In Rel-16, when CBG-based transmission is configured in a cell of a PUCCH cell group, a type 2 HARQ-ACK CB is generated as a concatenation of two sub-codebooks shown in FIG. 6.

The first sub-codebook is a codebook that stores bits of HARQ-ACK information for TB based PDSCH receptions, SPS PDSCH release, SPS PDSCH reception, and DCI format 1_1 indicating SCell dormancy.

The second sub-codebook is a codebook that stores bits of HARQ-ACK information for CBG-based PDSCH reception in the cell.

### (Processing contents assumed in the present embodiment)

In the present embodiment, it is assumed that the base station 10 performs any one of the following operations Alt1 to Alt3, regarding counting of DAI in generating a type 2 HARQ-ACK CB corresponding to a DCI for scheduling a plurality of PDSCHs. Note that C-DAI is the counter-DAI, and T-DAI is the total-DAI.

Alt1: The base station 10 counts C-DAI/T-DAI for each DCI.

Alt2: The base station 10 counts C-DAI/T-DAI for each PDSCH.

Alt3: The base station 10 counts C-DAI/T-DAI for every M scheduled PDSCHs. Here, M is a configurable value, for example, a value such as 1, 2, 4, ... and the like.

Atl1 and Alt2 are described in more detail below.

### <Alt1>

The method of counting C-DAI/T-DAI for each DCI may be the same as that of Rel-16. If Alt1 (counting DAI for each DCI) is assumed to be used for generating a type 2 HARQ-ACK CB corresponding to a DCI that can schedule a plurality of PDSCHs, the terminal 20 generates at least two sub-codebooks for a PUCCH cell group. The first sub-codebook of the two sub-codebooks is for the following DCI. Note that SLIV indicates a time resource allocated to a PDSCH. The TDRA table includes a plurality of rows. When an index indicating a row is designated by a DCI, the terminal 20 receives the PDSCH by using the time resource designated by the SLIV of the row.

- DCI in which CBG-based scheduling is not configured and a TDRA table having one SLIV in each row is configured
- DCI, that schedules only one PDSCH, in which CBG-based scheduling is not configured, and a TDRA table having a plurality of SLIVs in at least one row is configured

The second sub-codebook of the two sub-codebooks is for the following DCI.

- DCI, that schedules a plurality of PDSCHs, in which a TDRA table having a plurality of SLIVs in at least one row

### <Alt2>

If Alt2 (counting DAI for each PDSCH) is assumed to be used for generating a type 2 HARQ-ACK CB corresponding to a DCI that can schedule a plurality of PDSCHs, the base station 10 performs the following operation.

The PDSCH(s) scheduled by a single DCI is counted first, the serving cell(s) in the same PDCCH monitoring occasion of the same PUCCH cell group is counted second, and the PDCCH monitoring occasion(s) is counted third. That is, the counting is performed in the order of PDSCH - > cell -> PDCCH monitoring occasion. The terminal 20 can store, for example, a HARQ-ACK information bit value for each PDSCH in a HARQ-ACK codebook based on the count value.

The bit width of the counter DCI field in the fallback DCI (i.e., DCI formats 0_0 and 1_0) is the same as that in Rel-15 NR.

In a serving cell in which CBG retransmission is not configured in the same PUCCH cell group, the number of bits of each of the counter DAI and the total DAI in the non-fallback DCI is extended as necessary based on at least the following.

- the number of SLIVs associated with a row index of a TDRA table

### (Problem)

In Alt1 to Alt3 regarding the type 2 HARQ-ACK feedback described above, there are the following problems.

(1) The number of sub-codebooks and configuration of the sub-codebooks are unknown. In particular, it is not clear how the sub-codebook differs based on with or without configuration of the CBG-based scheduling. For example, the number of sub-codebooks and the configuration of the sub-codebooks for each of the following examples are unclear.
   - CBG-based scheduling for a single PDSCH scheduling only
   - CBG-based scheduling for multiple PDSCH scheduling
(2) For time domain bundling of HARQ-ACK information, an impact on configuration of codebook/sub-codebook is unknown, details of bundling are unknown, and a condition for performing time domain bundling is unknown. For the conditions, the configuration of CBG-based transmission, the configuration of spatial bundling, etc., need to be considered.
(3) The operation when the terminal 20 is notified of support of the type 2 HARQ-ACK codebook for PDSCH receptions of which the number is larger than 1 scheduled in the same PDCCH monitoring occasion is not clear.

An operation example for solving the problem will be described below.

### (Basic Operation)

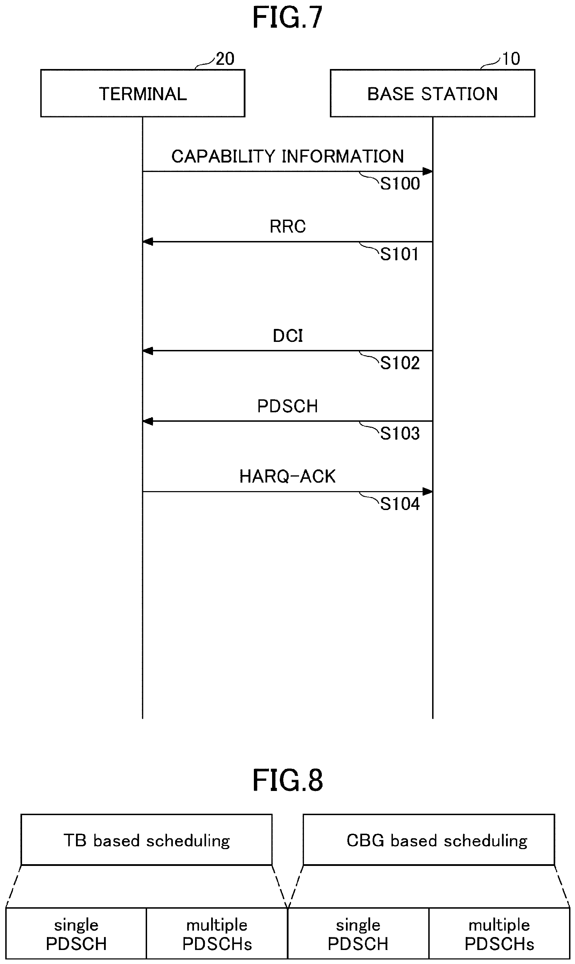

First, an example of basic operation in the radio communication system of the present embodiment will be described with reference to FIG. 7.

In S100, the terminal 20 transmits capability information (UE capability) to the base station 10. The base station 10 can determine contents of information to be transmitted to the terminal 20 in the following S101 and S102, for example, based on the capability information.

In S101, the base station 10 transmits configuration information to the terminal 20 by an RRC message, and the terminal 20 receives the configuration information. The configuration information is, for example, whether or not CBG-based transmission is performed. The configuration information may be information notified by an RRC signaling which will appear in the description of Examples described later.

In S102, the base station 10 transmits, to the terminal 20, information including scheduling (allocation information) for a plurality of PDSCHs, for example, by a DCI, and the terminal 20 receives the DCI. The DCI includes a C-DAI and a T-DAI.

In S103, the terminal 20 receives a PDSCH based on the scheduling information in the DCI, and transmits HARQ-ACK information (type 2 HARQ-ACK CB) to the base station 10 in S104. The base station 10 receives the HARQ-ACK information.

Each Example will be described below.

### (Example 1)

First, Example 1 will be described. Example 1 is an embodiment for the above-described Alt1 (C-DAI/T-DAI count per DCI). Example 1 includes options 1 to 3, each of which will be described below.

### <Example 1: Option 1>

FIG. 8 shows an example of a type 2 HARQ-ACK codebook in option 1. As illustrated in FIG. 8, in option 1, the terminal 20 generates different sub-codebooks for TB-based scheduling and CBG-based scheduling. Furthermore, the terminal 20 generates different sub-codebooks for single PDSCH scheduling and multiple PDSCH scheduling.

For example, the terminal 20 includes HARQ-ACK information for SPS release, SPS receptions, and Scell dormancy DCI in the first codebook that is a sub-codebook for TB-based single PDSCH scheduling.

Option 1 includes the following options 1-1 and 1-2, each of which will be described below. Note that multi-PDSCH may be used as an expression synonymous with a plurality of PDSCHs.

### <Example 1: Option 1-1>

In option 1-1, the terminal 20 does not generate a separate sub-codebook for a DCI that schedules multi-PDSCH, regardless of the number of PDSCHs to be scheduled. Accordingly, the number of sub-codebooks generated by the terminal 20 is as follows.
- In multi-PDSCH scheduling, if CBG-based transmission is supported, at least four sub-codebooks are required.
- If CBG-based transmission in multi-PDSCH scheduling is not supported, at least three sub-codebooks are required.

The number of HARQ-ACK bits in each sub-codebook in option 1-1 is as follows.

For the first sub-codebook for TB-based single PDSCH scheduling, the number of HARQ-ACK bits for each DCI is the same as the number of HARQ-ACK bits in the TB-based sub-codebook in Rel-16.

For the second sub-codebook for TB-based multi-PDSCH scheduling, the number of HARQ-ACK bits for each DCI is determined as N_{PDSCH}×N^{multi}_{TB}.

Here, N_{PDSCH} is the maximum number of PDSCHs that can be scheduled by one DCI for all PDSCH serving cells. The maximum number is determined by, for example, configuration by an RRC signaling, specifications, or the like.

If it is determined that the maximum number of CWs/TBs for one PDSCH when multi-PDSCH is scheduled by one DCI is greater than 1 according to configuration by an RRC signaling or specifications, N^{multi}_{TB}=2 holds true if spatial bundling is not supported or enabled in the case of multi-PDSCH scheduling. When it is determined that the maximum number of CWs/TBs for one PDSCH when multi-PDSCH is scheduled by one DCI is greater than 1 according to RRC configuration or specifications, N^{multi}_{TB}=1 holds true in cases other than "when spatial bundling is not supported or enabled in the case of multi-PDSCH scheduling".

In cases other than "when it is determined that the maximum number of CWs/TBs for one PDSCH when multi-PDSCH is scheduled by one DCI is greater than 1 according to RRC configuration or specifications", N^{multi}_{TB}=1 holds true.

- In the third sub-codebook for CBG-based single PDSCH scheduling, the number of HARQ-ACK bits for each DCI is the same as that in the CBG-based sub-codebook in Rel-16.
- In the fourth sub-codebook for CBG-based multi-PDSCH scheduling (if this is present), the number of HARQ-ACK bits for each DCI is determined as the maximum value of N_{PDSCH,c}×N^{multi}_{TB,c}×N^{CBG/TB}_{multi,c} over all serving cells for which CBG-based multi-PDSCH scheduling is configured.

Here, N_{PDSCH,c} is the maximum number of PDSCHs that can be scheduled by one DCI in the serving cell c. N^{multi}_{TB,c} is the maximum number of CWs/TBs for one PDSCH when multi-PDSCH is scheduled by one DCI in the serving cell c. N^{CBG/TB}_{multi,c} is the maximum number of CBGs when multi-PDSCH is scheduled by a DCI in the serving cell c.

### <Example 1: Option 1-2>

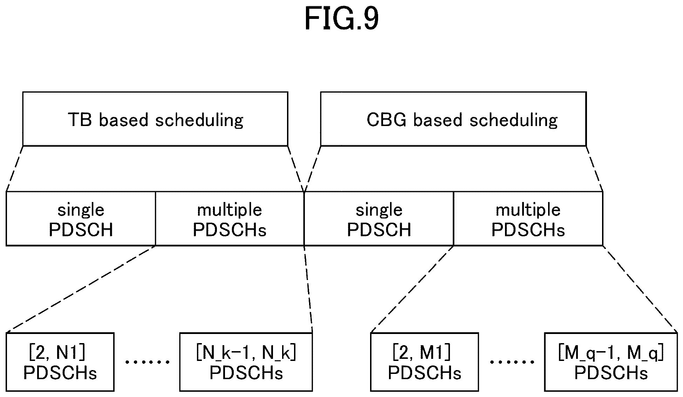

In option 1-2, the terminal 20 generates different sub-codebooks according to the number of PDSCHs to be scheduled by a DCI. FIG. 9 shows an example of a type 2 HARQ-ACK codebook in option 1-2.

The number of sub-codebooks in option 1-2 is as follows. Note that, in the present specification, "A and/or B" means "A and B, or A or B".

The number of sub-codebooks in TB-based multi-PDSCH scheduling and/or CBG-based multi-PDSCH scheduling may be defined in a specification or may be configured from the base station 10 to the terminal 20 by an RRC signaling.

For example, two sub-codebooks are provided for TB-based multi-PDSCH, one is a sub-codebook for a DCI for scheduling 2 to 4 PDSCHs, and the other is a sub-codebook for a DCI for scheduling 5 to 8 PDSCHs. As a result, for example, HARQ-ACK information for DCI scheduling 3 PDSCHs is included in the former sub-codebook.

The number of HARQ-ACK bits in each sub-codebook is as follows.

The number of HARQ-ACK bits for each DCI in a sub-codebook corresponding to TB-based [N_k-1, N_k] (a value from N_k-1 to N_k) PDSCHs is determined as N_k×N^{multi}_{TB}. The method of determining the value of N^{multi}_{TB} is the same as that in option 1-1.

The number of HARQ-ACK bits for each DCI in a sub-codebook corresponding to CBG-based [N_k-1, N_k] PDSCHs (if this is allowed) is determined as
N_k×N^{multi}_{TB,c}×N^{CBG/TB}_{multi,c}. The method of determining the values of N^{multi}_{TB,c} and N^{CBG/TB}_{multi,c} is the same as that in option 1-1.

An advantage of option 1-1 is that the number of sub-codebooks is reduced compared to option 1-2. An advantage of option 1-2 is that redundancy of sub-codebooks for multi-PDSCH is lower compared to option 1-1.

### <Example 1: Option 2>

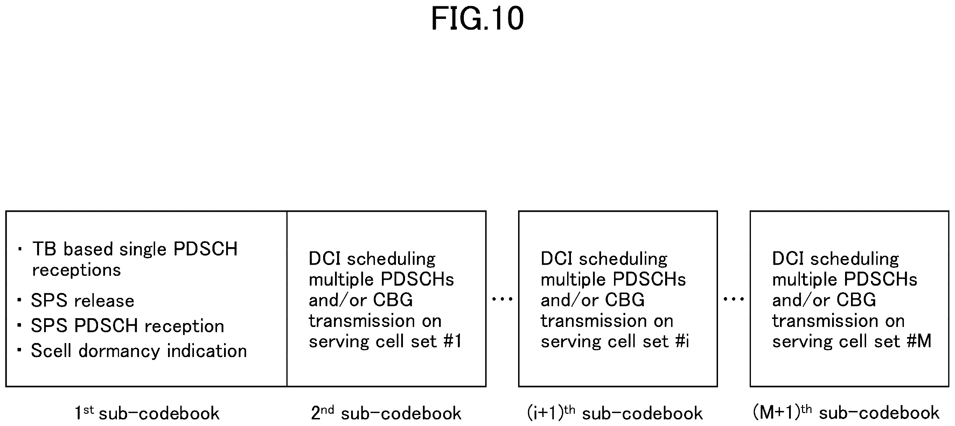

Next, option 2 of Example 1 will be described. In option 2, the terminal 20 generates different sub-codebooks for (sets of) different serving cells. FIG. 10 shows an example of a type 2 HARQ-ACK codebook in option 2.

In option 2, the terminal 20 performs the following processing on a DCI or a PDSCH that is not included in the first sub-codebook.

The terminal 20 divides a plurality of serving cells into M sets. For example, a set of i-th serving cells is set as Cᵢ={serving cell #m₁,......, serving cell #mᵢ}, and this is associated with the i-th sub-codebook.

Next, the terminal 20 generates N_{i,max} HARQ-ACK bits for a DCI that schedules multi-PDSCH in a serving cell belonging to the set Cᵢ, and includes the N_{i,max} HARQ-ACK bits in the i-th sub-codebook.

Option 2 has an advantage over Option 1 in that the number of sub-codebooks can be reduced while maintaining the same redundancy level.

In option 2, there are two options for the process of determining a set of serving cells and the number of HARQ-ACK bits. These are described as options 2-1 and 2-2.

### <Example 1: Option 2-1>

In option 2-1, mapping between a serving cell and a serving cell set is configured for the terminal 20 by an RRC signaling. The terminal 20 calculates N_{i,max} for the serving cell of the set based on parameters related to a PDSCH (example: CBG, CW, multi-PDSCH scheduling related parameters). The details are as follows.

N_{i,max} is calculated based on the maximum value of max(N^{DL,multiple}_{TB,c}×N^{CBG/TB,multiple}_{HARQ-ACK,c}× N^{PDSCH,multiple}_{c},N^{DL,single}_{TB,c}×N^{CBG/TB,single}_{HARQ-ACK,c}) over all serving cells in the set Cᵢ.

N^{DL,multiple}_{TB,c} is the maximum number of CWs/TBs when multi-PDSCH is scheduled by a DCI in a serving cell c. If spatial bundling for multi-PDSCH scheduling is enabled or configured, this value is 1.

N^{CBG/TB,multiple}_{HARQ-ACK,c} is the maximum number of CBGs when multi-PDSCH is scheduled by a DCI in a serving cell c. If CBG-based transmission by multi-PDSCH scheduling by a single DCI is not supported or if CBG-based transmission is not configured in the serving cell c, this value is 1.

N^{PDSCH,multiple}_{c} is the maximum number of PDSCHs that can be scheduled by one DCI in the serving cell c.

N^{DB,single}_{TB,c} is the maximum number of CWs/TBs when a single PDSCH is scheduled in a serving cell c. If spatial bundling is enabled or configured, this value is 1.

N^{CBG/TB,single}_{HARQ-ACK,c} is the maximum number of CBGs when a single PDSCH is scheduled by a DCI in a serving cell c. If CBG-based transmission is not configured in the serving cell c, this value is 1.

### <Example 1: Option 2-2>

In option 2, the number of serving cell sets and the corresponding maximum number (N_{i,max}) of HARQ-ACK bits are defined in a specification or configured by the base station 10 to the terminal 20 via an RRC signaling. The terminal 20 determines which serving cell set includes the serving cell c based on PDSCH related parameters. The details are as follows.

For each i>0, assuming that N_{i-1,max}≦N_{i,max} holds true. If N_{i-1,max}≦max (N^{DL,multiple}_{TB,c}×N^{CBG/TB,multiple}_{HARQ-ACK,c}× N^{PDSCH,multiple}_{c},N^{DL,single}_{TB,c}×N^{CBG/TB,single}_{HARQ-ACK,c})≦N_{i,max}, the serving cell c is included in the serving cell set Cᵢ.

### <Example 1: Option 3>

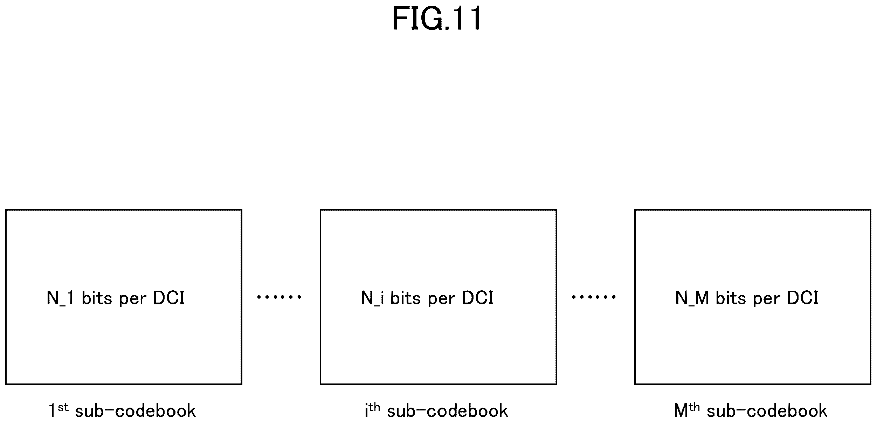

In option 3, the terminal 20 generates separate sub-codebooks based on actual scheduling information by a DCI. FIG. 11 shows an example of a type 2 HARQ-ACK codebook in option 3. More specifically, a plurality of sub-codebooks having different target numbers of HARQ-ACK bits are generated as follows.

Here, the number of sub-codebooks and the corresponding fixed number of HARQ-ACK bits are configured by an RRC signaling or specified in a specification. For example, it is assumed that the first sub-codebook has N₁ bits, the second sub-codebook has N₂ bits, ..... , the M-th sub-codebook has N_{M} bits . Here, N₁≦N₂≦···≦N_{M} holds true.

When the Nᵢ₋₁≦N^{TB}_{c}×N^{CBG}_{c}×N^{PDSCH}_{actual}≦Nᵢ holds true for a DCI that schedules the N^{PDSCH}_{actual} PDSCHs in a serving cell c, the terminal 20 includes HARQ-ACK information for a PDSCH scheduled by the DCI in the i-th sub-codebook.

Here, N^{PDSCH}_{actual} is the actual number of PDSCHs scheduled by the current DCI. The following description will be made in accordance with the size of N^{PDSCH}_{actual}.

### (Case where N^{PDSCH}_{actual}>1)

N^{TB}_{c} is the maximum number of TBs/CWs per PDSCH in multi-PDSCH scheduling. If spatial bundling for the multi-PDSCH scheduling case is enabled or configured, this value is 1.

N^{CBG}_{c} is the maximum number of CBGs in a case where a plurality of PDSCHs are scheduled by a DCI1_1 in a serving cell c. If a PDSCH is scheduled by a DCI1_0/1_2, or if CBG-based transmission is not supported in multi-PDSCH scheduling by a single DCI, or if CBG-based transmission is not supported in the serving cell c, this value is 1.

### (Case where N^{PDSCH}_{actual}=1)

N^{TB}_{c} is the maximum number of TBs/CWs when a single PDSCH is scheduled in the serving cell c. If spatial bundling is enabled or configured, this value is 1.

N^{CBG}_{c} is the maximum number of CBGs when a single PDSCH is scheduled by a DCI1_1 in a serving cell c. If a PDSCH is scheduled by a DCI1_0/1_2 or if CBG-based transmission is not supported in the serving cell c, this value is 1.

In option 3, for SPS release, SPS PDSCH receptions, and Scell dormancy indication, HARQ-ACK information is included in the first sub-codebook, for example. Option 3 has an advantage of less redundancy than Options 1 and 2.

According to Example 1, it is possible to appropriately generate a type 2 HARQ-ACK codebook when performing DAI count for each DCI.

### (Example 2)

Next, Example 2 will be described. Example 2 is an embodiment corresponding to the above-described Alt2 (counting C-DAI/T-DAI for each PDSCH). The number of sub-codebooks is as follows.

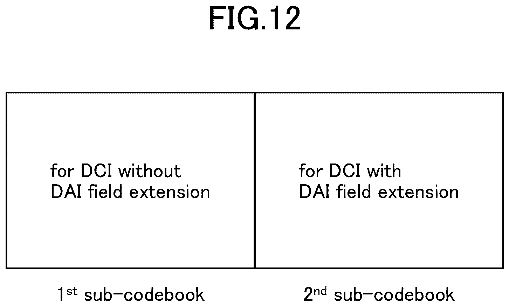

When CBG-based scheduling is not configured in any cell, the terminal 20 generates two sub-codebooks as a type 2 HARQ-ACK codebook. FIG. 12 shows an example of the type 2 HARQ-ACK codebook in this case.

The first sub-codebook is a sub-codebook for a DCI without DAI field extension. DCIs without DAI field extension are, for example, DCI1_0 and a non-fallback DCI for which a TDRA table with only one SLIV in each row is configured.

The second sub-codebook is a sub-codebook for a DCI with DAI field extension. The DCI with DAI field extension is, for example, a non-fallback DCI in which a TDRA table having a plurality of fields in at least one row is configured.

The first sub-codebook is, for example, a sub-codebook for a DCI for scheduling a single PDSCH, and the second sub-codebook is, for example, a sub-codebook for a DCI for scheduling a plurality of PDSCHs.

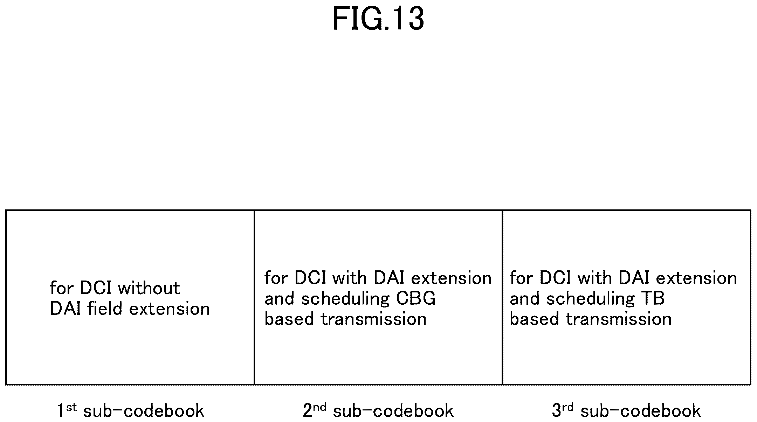

When CBG-based scheduling is configured in a serving cell, the terminal 20 generates two or three sub-codebooks as the type 2 HARQ-ACK codebook. FIG. 13 shows an example of the type 2 HARQ-ACK codebook in this case.

The first sub-codebook is a sub-codebook for a DCI without DAI field extension. The DCIs without DAI field extension herein are, for example, a DCI1_0 and a DCI1_2 in which a TDRA table having only one SLIV in each row is configured. The first sub-codebook is, for example, a sub-codebook for a DCI for scheduling a single PDSCH with CBG.

The second sub-codebook is a sub-codebook for a DCI that schedules CBG-based transmission with DAI field extension. The DCI is, for example, a DCI1_1 in a serving cell in which CBG-based transmission is configured. The second sub-codebook is, for example, a sub-codebook for a DCI for scheduling a plurality of PDSCHs with CBG.

The third sub-codebook is a sub-codebook for a DCI that schedules TB-based transmission with DAI field extension. The DCIs are, for example, a DCI1_1 of a serving cell in which CBG-based transmission is not configured and a DCI1_2 in which a TDRA table having a plurality of SLIVs in at least one row is configured. The third sub-codebook is, for example, a sub-codebook for a DCI for scheduling a plurality of PDSCHs without CBG.

In Example 2, regarding the DAI in a case where a plurality of DCIs are transmitted in the same PDCCH occasion, there are the following options 1 and 2.

### <Example 2: Option 1>

The terminal 20 does not assume a DCI for scheduling a plurality of PDSCHs when detecting a plurality of DCIs in the same PDCCH occasion. Option 1 includes the following options 1-1 and 1-2.

### <Example 2: Option 1-1>

The terminal 20 does not assume a DCI in which a TDRA table including a plurality of SLIVs in at least one row is configured, when detecting a plurality of DCIs in the same PDCCH occasion.

### <Example 2: Option 1-2>

The terminal 20 assumes a DCI in which a TDRA table including a plurality of SLIVs in at least one row is configured, when detecting a plurality of DCIs in the same PDCCH occasion. However, scheduling of a plurality of PDSCHs is not allowed in any DCI. Note that option 1-1 is stricter than option 1-2.

For example, it is assumed that DCI #1 and DCI #2 are detected in the same cell in the same PDCCH monitoring occasion. Further, each of DCI #1 and DCI #2 schedules one PDSCH. If DCI #1 is DCI format 1 1 in which a TDRA table for multi-PDSCH scheduling is configured, no error occurs in option 1-2, but an error case occurs in option 1-1.

### <Example 2: Option 2>

In option 2, the terminal 20 assumes that there is a DCI for scheduling a plurality of PDSCHs when detecting a plurality of DCIs in the same PDCCH occasion.

In this case, the base station 20 first performs counting for PDSCHs for each DCI, and then performs counting for each PDCCH monitoring occasion, with respect to counting of DAI.

As a method of determining the order of DCI in a plurality of DCIs in counting, there are the following options 2-1 and 2-2.

In option 2-1, the base station 10 determines the order of DCI based on "start and/or end time" of the "first and/or last PDSCH" scheduled by each DCI. For example, DCI of the earliest time is counted first.

In option 2-2, the base station 10 determines the order of DCI based on the number of PDSCHs scheduled by each DCI. For example, DCIs are counted in descending order of the number of PDSCHs.

According to Example 2, it is possible to appropriately generate the type 2 HARQ-ACK codebook when DAI count is performed for each PDSCH.

### (Example 3)

Next, Example 3 will be described. Example 3 can be applied to both Examples 1 and 2. In Example 3, time domain bundling for a plurality of PDSCHs to be scheduled by one DCI will be described. The time domain bundling is, for example, to calculate AND (or OR) between HARQ-ACK information for a PDSCH received at time 1 and HARQ-ACK information for a PDSCH received at time 2, to convert two bits into one bit.

First, the following option 1 and option 2 will be described for conditions based on which the terminal 20 determines to perform time domain bundling.

### <Example 3: Option 1>

In option 1, whether to perform (whether to enable) time domain bundling across a plurality of PDSCHs is determined depending on "whether CBG-based transmission (for multi-PDSCH scheduling) is configured" and/or "the maximum number of TBs/CWs in PDSCH (for multi-PDSCH scheduling)" and/or "whether spatial bundling is configured when up to 2 CWs/TBs (for multi-PDSCH scheduling) are configured". Specific examples are described below.

Specific example 1: In a case where CBG-based transmission for multi-PDSCH scheduling is configured, the terminal 20 determines that time domain bundling over a plurality of PDSCHs cannot be enabled.

Specific example 2: In a case where the maximum number of TBs/CWs of a PDSCH is configured as 2 and spatial bundling is not configured, the terminal 20 determines that time domain bundling over a plurality of PDSCHs cannot be enabled.

### <example 3: Option 2>

In option 2, whether to perform (whether to enable) time domain bundling across a plurality of PDSCHs is determined independently of "whether CBG-based transmission (for multi-PDSCH scheduling) is configured" and/or "the maximum number of TBs/CWs per PDSCH (for multi-PDSCH scheduling)" and/or "whether spatial bundling is configured when up to two CWs/TBs (for multi-PDSCH scheduling) are configured". Examples are described below.

For example, when the maximum number of TBs/CWs of a PDSCH is set to 2, the terminal 20 determines that time domain bundling over a plurality of PDSCHs can be enabled or disabled. Whether or not to enable time domain bundling may be determined by an instruction (RRC, MAC, DCI, or the like) from the base station 10.

Next, the following cases 1 and 2 will be described for a bundling method over a plurality of PDSCHs.

### <Example 3: Case 1>

In case 1, if the maximum number of CW/TB of a PDSCH for multi-PDSCH scheduling is 1 in every serving cell in a sub-codebook according to RRC configuration or specification definition, the terminal 20 bundles HARQ-ACK information for a plurality of PDSCHs into M bits, or the terminal 20 bundles HARQ-ACK information for each of "M PDSCHs" into 1 bit. M may be determined by a specification or may be configured by the base station 10 through RRC. M may be 1, 2, 3, 4, or any number of 5 or more.

### <Example 3: Case 2>

In case 2, if the maximum number of CWs/TBs of a PDSCH for multi-PDSCH scheduling is 2 and time domain bundling is enabled in at least one serving cell in a sub-codebook according to RRC configuration or a specification, there are the following options 1 and 2.

In option 1, spatial bundling is (implicitly) enabled regardless of explicit configuration of spatial bundling in such a case, and the following steps 1 and 2 are performed.

In step 1, the terminal 20 performs spatial bundling on the HARQ-ACK for each PDSCH in the same manner as the spatial bundling of Rel-16. In step 2, the terminal 20 performs time domain bundling over a plurality of PDSCHs.

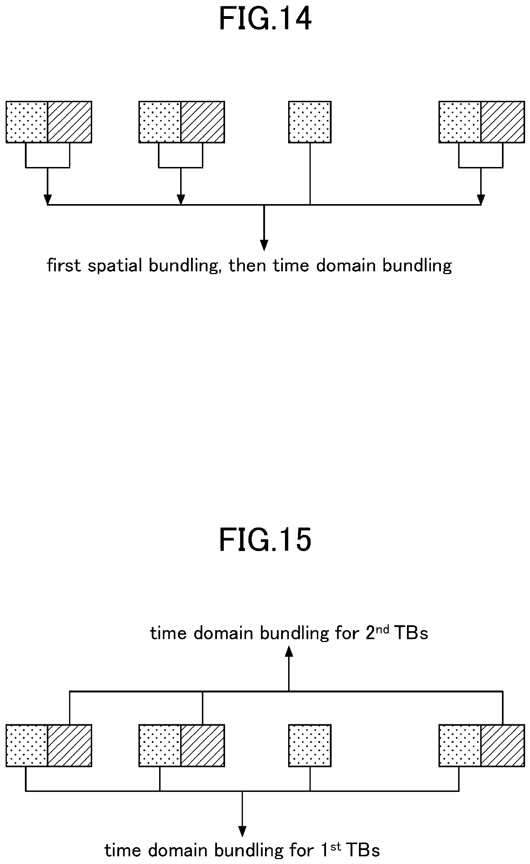

Option 2 requires explicit configuration for spatial bundling. In such a case, when the spatial bundling is configured, as illustrated in FIG. 14, the terminal 20 first performs spatial bundling, and then performs time domain bundling over a plurality of PDSCHs.

When spatial bundling is not configured, the following options 2-1 and 2-2 are available.

In option 2-1, as shown in FIG. 15, the terminal 20 first performs time domain bundling over the first TB in each of the plurality of PDSCHs, and then performs time domain bundling over the second TB in each of the plurality of PDSCHs. Note that if only one TB is actually scheduled, the second TB becomes ACK.

Option 2-2 is an error case.

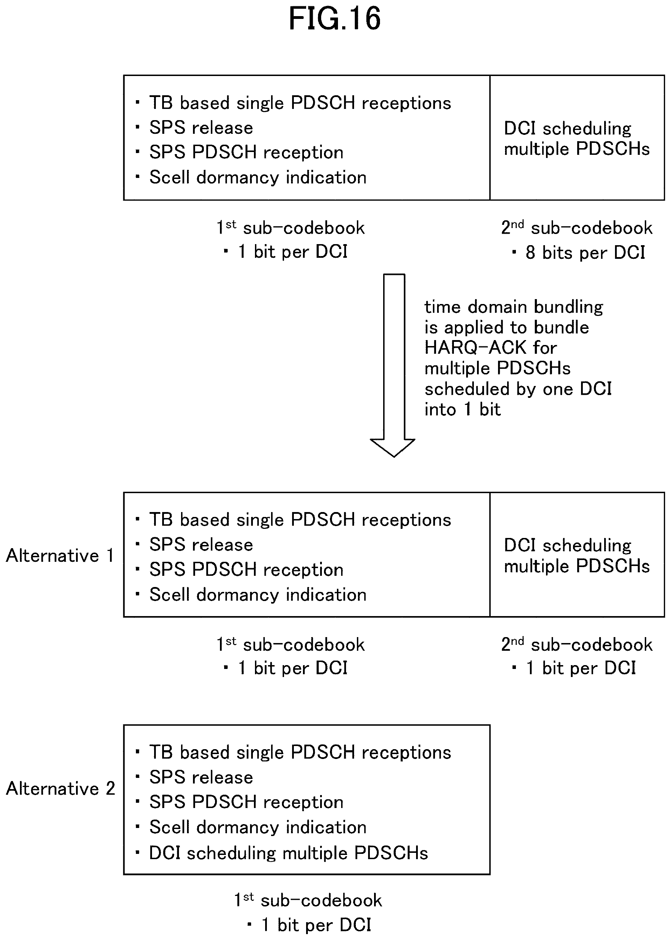

Impacts on codebooks/sub-codebooks in Example 3 will be described for each of Example 1 (Alt1) and Example 2 (Alt2). This is shown in FIG. 16.

### <Impacts on Example 1 (Alt1)>

Time domain bundling does not affect separation of sub-codebooks. For example, if HARQ-ACK information for a plurality of PDSCHs can be bundled into one bit per DCI, HARQ-ACK information for a plurality of PDSCHs and HARQ-ACK information for a single PDSCH are included in separate sub-codebooks respectively.

### < Impacts on Example 2 (Alt2)>

Time domain bundling affects separation of sub-codebooks. If time-domain bundling over a plurality of PDSCHs is enabled, a HARQ-ACK information bit for one DCI may be included in a sub-codebook for a single PDSCH.

Selection of a sub-codebook may be performed based on the number of HARQ-ACK information bits per DCI after bundling. For example, if HARQ-ACK information for a plurality of PDSCHs can be bundled into one bit per DCI, HARQ-ACK information for multi-PDSCH scheduling and single PDSCH scheduling is included in one sub-codebook as shown in FIG. 16. Note that FIG. 16 is an example of a case " max #CW =1, max # PDSCHs by one DCI =8, CBG not configured".

According to Example 3, time domain bundling can be appropriately performed when multi-PDSCH scheduling by a DCI is performed.

### (Other examples)

Hereinafter, examples applicable to any of Examples 1 to 3 will be described.

Which of the above-described plurality of Examples/options is used may be configured by a higher layer parameter transmitted from the base station 10 to the terminal 20, may be notified as a terminal capability (UE Capability) from the terminal 20 to the base station 10, may be defined by a specification, or may be configured by a higher layer parameter and notified as a terminal capability (UE Capability) by the terminal 20.

As the terminal capability (UE Capability), information indicating whether or not the terminal 20 supports scheduling of a plurality of PDSCHs based on a single DCI may be defined.

Further, as the terminal capability (UE Capability), information indicating whether or not the terminal 20 supports C-DAI/T-DAI counted for each DCI for type 2 HARQ-ACK feedback for multi-PDSCH scheduling may be defined.

Further, as the terminal capability (UE Capability), information indicating whether or not the terminal 20 supports C-DAI/T-DAI counted for each PDSCH for type 2 HARQ-ACK feedback for multi-PDSCH scheduling may be defined.

Further, as the terminal capability (UE Capability), information indicating whether or not the terminal 20 supports separate sub-codebooks for a DCI for scheduling multi-PDSCH and/or CBG-based transmission in different serving cells may be defined.

Further, as the terminal capability (UE Capability), information indicating whether the terminal 20 supports separate sub-codebooks for a DCI for scheduling different numbers of PDSCHs and/or CBG-based transmissions may be defined.

Further, as the terminal capability (UE Capability), information indicating whether or not the terminal 20 supports time domain bundling over a plurality of PDSCHs may be defined.

Further, as the terminal capability (UE Capability), when up to two TBs/CWs can be scheduled for multi-PDSCH scheduling, information indicating whether or not the terminal 20 supports time domain bundling over a plurality of PDSCHs may be defined.

The terminal 20 may transmit any one or more of the above-described pieces of capability information to the base station 10. Further, the base station 10 may instruct the terminal 20 to perform an operation corresponding to the capability based on the capability information received from the terminal 20.

As a variation, the techniques described in Examples 1-3 may be applied to type 1 HARQ-ACK codebook or HARQ-ACK codebooks other than types 1 and 2. The order of sub-codebooks in each Example is merely an example, and the order may be other than the order described in each Example.

The technique of Example 1 may be applied to the case where DAI is counted for each PDSCH, and the technique of Example 2 may be applied to the case where DAI is counted for each DCI.

Further, in Examples 1-3, a specific example in which a sub-codebook for TB-based scheduling (scheduling by the first method) and a sub-codebook for CBG-based scheduling (scheduling by the second method) are divided has been described, but this is merely an example. The scheduling by the first method may be a method other than TB-based scheduling, and the scheduling by the second method may be a method other than CBG-based scheduling.

### (Apparatus Configuration)

Next, functional configuration examples of the base station 10 and the terminal 20 that execute processes and operations described above will be described.

### <Base Station 10>

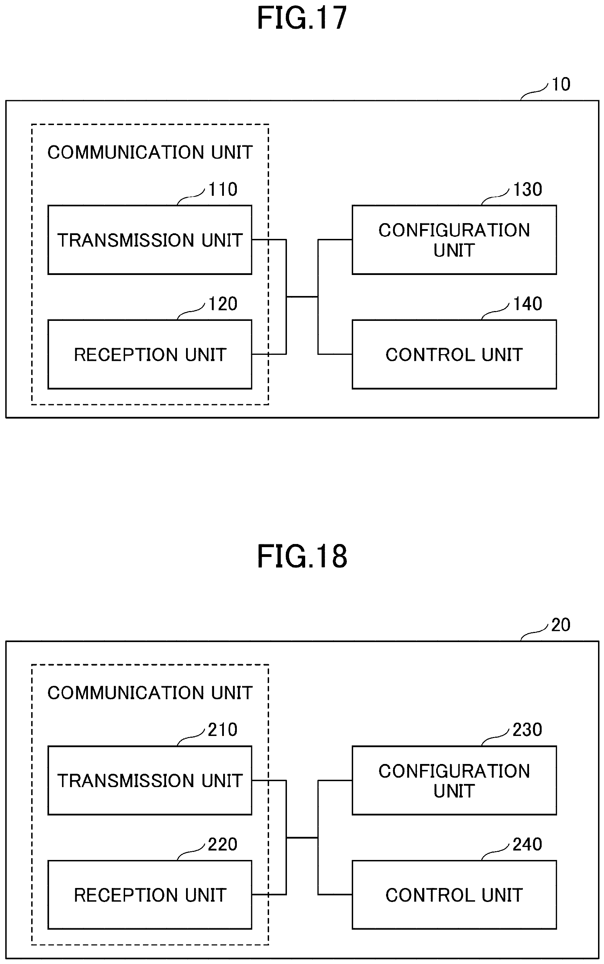

FIG. 17 is a diagram illustrating an example of a functional configuration of the base station 10. As illustrated in FIG. 17, the base station 10 includes a transmission unit 110, a reception unit 120, a configuration unit 130, and a control unit 140. The functional configuration shown in FIG. 17 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of higher layer from the received signal. The transmission unit 110 has a function of transmitting an NR-PSS, an NR-SSS, an NR-PBCH, a DL/UL control signal, a DCI by a PDCCH, data by a PDSCH, and the like to the terminal 20.

The configuration unit 130 stores configuration information configured in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 18 is a diagram illustrating an example of a functional configuration of the terminal 20. As illustrated in FIG. 18, the terminal 20 includes a transmission unit 210, a reception unit 220, a configuration unit 230, and a control unit 240. The functional configuration illustrated in FIG. 18 is merely an example. The functional sections and the names of the functional units may be any as long as the operations according to the embodiment of the present invention can be executed. The transmission 210 and the reception unit 220 may be collectively referred to as a communication unit.

The transmission unit 210 generates a transmission signal from transmission data and transmits the transmission signal by radio. The reception unit 220 receives various signals by radio and acquires a signal of higher layer from the received signal of physical layer. Also, the reception unit 220 has a function of receiving an NR-PSS, an NR-SSS, an NR-PBCH, a DL/UL/SL control signal, a DCI in a PDCCH, data in a PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information configured in advance. The control unit 240 controls the terminal 20. The control unit 240 also includes a function of performing LBT.

The terminal and the base station of the present embodiment may be configured as a terminal and a base station described in the following items. Also, the following feedback method may also be carried out.

### <Configurations on Examples 1 and 3>

### (Item 1)

A terminal including:
a control unit configured to generate feedback information including first feedback information for control information that performs scheduling for a downlink shared channel by a first method and second feedback information for control information that performs scheduling for a downlink shared channel by a second method; and
a transmission unit configured to transmit the feedback information in uplink,
wherein at least the first feedback information includes third feedback information for control information that performs scheduling for a single downlink shared channel and fourth feedback information for control information that performs scheduling for a plurality of downlink shared channels.

### (Item 2 )

The terminal as described in item 1, wherein the fourth feedback information includes a plurality of pieces of feedback information according to difference of the number of downlink control channels for performing scheduling by control information.

### (Item 3)

A terminal including:
a control unit configured to generate feedback information including first feedback information for control information that performs scheduling for a downlink shared channel by a first method and a plurality of pieces of second feedback information for control information that performs scheduling for a downlink shared channel by a second method; and
a transmission unit configured to transmit the feedback information in uplink,
wherein each of the plurality of pieces of second feedback information correspond to a different cell set.

### (Item 4)

The terminal as described in any one of items 1-3,
wherein the control unit performs time domain bundling for feedback information of a plurality of downlink shared channels after performing spatial bundling for feedback information of each downlink shared channel in a plurality of downlink shared channels.

### (Item 5)

A base station including:
a transmission unit configured to transmit first control information that performs scheduling for a downlink shared channel by a first method and second control information that performs scheduling for a downlink shared channel by a second method; and
a reception unit configured to receive feedback information, in uplink, including first feedback information for the first control information and second feedback information for the second control information;
wherein at least the first feedback information includes third feedback information for control information that performs scheduling for a single downlink shared channel and fourth feedback information for control information that performs scheduling for a plurality of downlink shared channels.

### (Item 6)

A feedback method executed by a terminal, the feedback method including:
generating feedback information including first feedback information for control information that performs scheduling for a downlink shared channel by a first method and second feedback information for control information that performs scheduling for a downlink shared channel by a second method; and
transmitting the feedback information in uplink,
wherein at least the first feedback information includes third feedback information for control information that performs scheduling for a single downlink shared channel and fourth feedback information for control information that performs scheduling for a plurality of downlink shared channels.

According to any of the above configurations, a technique is provided that enables a terminal to transmit feedback information properly when a plurality of PDSCHs are scheduled by one piece of control information. According to item 2, it is possible to generate feedback information in which the difference in the number of downlink control channels is clarified. According to item 4, it is possible to properly perform time domain bundling when a plurality of downlink shared channels are scheduled by control information.

### <Configurations on Examples 2 and 3>

### (Item 1)

A terminal including:
a control unit configured to generate feedback information including first feedback information for control information that performs scheduling for a single downlink shared channel and second feedback information for control information that performs scheduling for a plurality of downlink shared channels; and
a transmission unit configured to transmit the feedback information in uplink.

### (Item 2)

The terminal as described in item 1,
wherein, when scheduling based on code block group is configured in a cell, the control unit further includes, in the feedback information, third feedback information for control information in a cell in which scheduling based on code block group is not configured.

### (Item 3)

The terminal as described in item 1 or 2,
wherein the control unit assumes that any of a plurality of pieces of control information detected in a same control channel monitoring occasion does not perform scheduling for a plurality of downlink shared channels.

### (Item 4)

The terminal as described in any one of items 1-3,
wherein the control unit performs time domain bundling for feedback information of a plurality of downlink shared channels after performing spatial bundling for feedback information of each downlink shared channel in a plurality of downlink shared channels.

### (Item 5)

A base station including:
a transmission unit configured to transmit first control information that performs scheduling for a single downlink shared channel and second control information that performs scheduling for a plurality of downlink shared channels; and
a reception unit configured to receive feedback information, in uplink, including first feedback information for the first control information and second feedback information for the second control information.

### (Item 6)

A feedback method executed by a terminal, the feedback method including:
generating feedback information including first feedback information for control information that performs scheduling for a single downlink shared channel and second feedback information for control information that performs scheduling for a plurality of downlink shared channels; and
transmitting the feedback information in uplink.

According to any of the above configurations, a technique is provided that enables a terminal to transmit feedback information properly when a plurality of PDSCHs are scheduled by one piece of control information. According to item 2, it is possible to generate feedback information according to presence or absence of scheduling configuration based on code block group. According to item 3, it is possible to clarify the operation in the case of receiving a plurality of pieces of control information in the same control channel monitoring occasion. According to item 4, it is possible to properly perform time domain bundling when a plurality of downlink shared channels are scheduled by control information.

### (Hardware Configuration)

The block diagrams (FIG. 17 and FIG. 18) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that performstransmission is referred to as the transmitting unit or the transmitter. As described above, the attainment method thereof is not particularly limited.

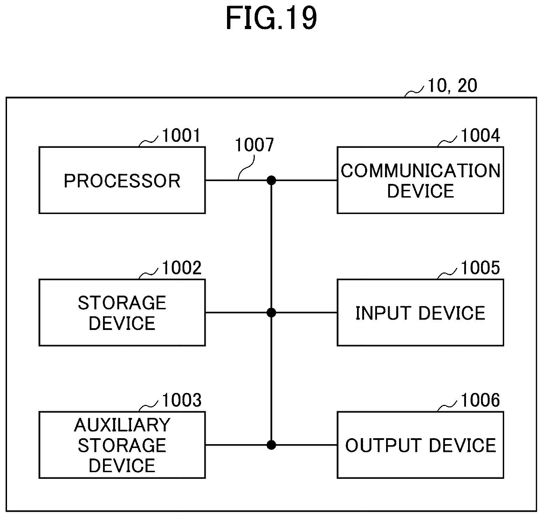

For example, the base station 10, the terminal 20, and the like in one embodiment of this disclosure may function as a computer for performing the processing of a radio communication method of this disclosure. FIG. 19 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in FIG. 17 may be attained by a control program that is stored in the storage device 1002 and is operated by the processor 1001. In addition, for example, the control unit 240 of the terminal 20 illustrated in FIG. 18 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

The terminal 20 or the base station 10 may be provided in a vehicle 1. FIG. 18 shows a configuration example of the vehicle 1.

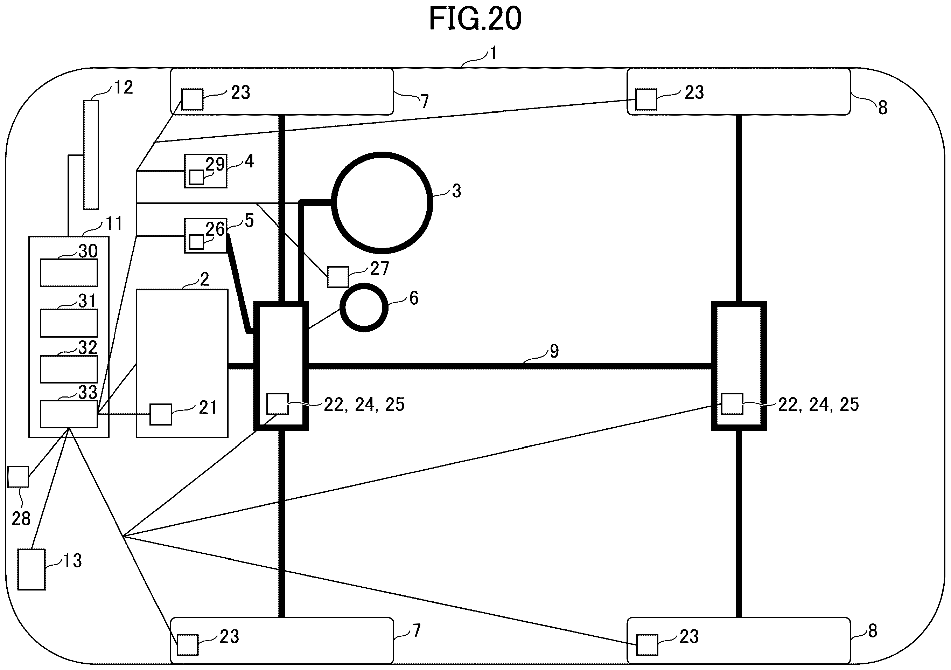

As shown in FIG. 20, the vehicle 1 includes a drive unit 2, a steering unit 3, an accelerator pedal 4, a brake pedal 5, a shift lever 6, front wheels 7 of left and right, rear wheels 8 of left and right, an axle 9, an electronic control unit 11, various sensors 21-29, an information service unit 12, and a communication module 13.

The drive unit 2 may include, for example, an engine, a motor, and a hybrid of an engine and a motor. The steering unit 3 includes at least a steering wheel and is configured to steer at least one of the front wheel and the rear wheel, based on the operation of the steering wheel operated by the user.

The electronic control unit 11 includes a microprocessor 31, a memory (ROM, RAM) 32, and a communication port (IO port) 33. The electronic control unit 11 receives signals from the various sensors 21-27 provided in the vehicle. The electronic control unit 11 may be referred to as an ECU (Electronic control unit).

The signals from the various sensors 21 to 28 include a current signal from a current sensor 21 which senses the current of the motor, a front or rear wheel rotation signal acquired by a revolution sensor 22, a front or rear wheel pneumatic signal acquired by a pneumatic sensor 23, a vehicle speed signal acquired by a vehicle speed sensor 24, an acceleration signal acquired by an acceleration sensor 25, a stepped-on accelerator pedal signal acquired by an accelerator pedal sensor 29, a stepped-on brake pedal signal acquired by a brake pedal sensor 26, an operation signal of a shift lever acquired by a shift lever sensor 27, and a detection signal, acquired by the object detection sensor 28, for detecting an obstacle, a vehicle, a pedestrian, and the like.

The information service unit 12 includes various devices for providing various kinds of information such as driving information, traffic information, and entertainment information, including a car navigation system, an audio system, a speaker, a television, and a radio, and one or more ECUs controlling these devices. The information service unit 12 provides various types of multimedia information and multimedia services to the occupants of the vehicle 1 by using information obtained from the external device through the communication module 13 or the like.

A driving support system unit 30 includes: various devices for providing functions of preventing accidents and reducing driver' s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 30 transmits and receives various types of information via the communication module 13 to realize a driving support function or an autonomous driving function.

The communication module 13 may communicate with the microprocessor 31 and components of the vehicle 1 via a communication port. For example, the communication module 13 transmits and receives data via the communication port 33, to and from the drive unit 2, the steering unit 3, the accelerator pedal 4, the brake pedal 5, the shift lever 6, the front wheels 7 of left and right, the rear wheels 8 of left and right, the axle 9, the microprocessor 31 and the memory (ROM, RAM) 32 in the electronic control unit 11, and sensors 21-28 provided in the vehicle 1.

The communication module 13 is a communication device that can be controlled by the microprocessor 31 of the electronic control unit 11 and that is capable of communicating with external devices. For example, various kinds of information are transmitted to and received from external devices through radio communication. The communication module 13 may be internal to or external to the electronic control unit 11. The external devices may include, for example, a base station, a mobile station, or the like.

The communication module 13 transmits a current signal, which is input to the electronic control unit 11 from the current sensor, to the external devices through radio communication. In addition, the communication module 13 also transmits, to the external devices through radio communication, the front or rear wheel rotation signal acquired by the revolution sensor 22, the front or rear wheel pneumatic signal acquired by the pneumatic sensor 23, the vehicle speed signal acquired by the vehicle speed sensor 24, the acceleration signal acquired by the acceleration sensor 25, the stepped-on accelerator pedal signal acquired by the accelerator pedal sensor 29, the stepped-on brake pedal signal acquired by the brake pedal sensor 26, the operation signal of the shift lever acquired by the shift lever sensor 27, and the detection signal, acquired by the object detection sensor 28, for detecting an obstacle, a vehicle, a pedestrian, and the like, that are input to the electronic control unit 11.

The communication module 13 receives various types of information (traffic information, signal information, inter-vehicle information, etc.) transmitted from the external devices and displays the received information on the information service unit 12 provided in the vehicle 1. In addition, the communication module 13 stores the various types of information received from the external devices in the memory 32 available to the microprocessor 31. Based on the information stored in the memory 32, the microprocessor 31 may control the drive unit 2, the steering unit 3, the accelerator pedal 4, the brake pedal 5, the shift lever 6, the front wheels 7 of left and right, the rear wheels 8 of left and right, the axle 9, the sensors 21-28, etc., mounted in the vehicle 1.

The terminal 20 or the base station 10 described in the present embodiment may be used as the communication module 13.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG) (x is an integer or decimal, for example), future radio access (FRA), new radio (NR), new radio access (NX), future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The mobile object may be stopped. Examples of the mobile object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercrafts, airplanes, rockets, artificial satellites, drones, multi-copters, quadcopters, balloons, and objects mounted thereon. The mobile object may be a mobile object that autonomously travels based on an operation command. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a sidelink channel.

Similarly, the terminal in this disclosure may be replaced with the base station. In this case, the function of the user terminal described above may be provided in the base station.

The term "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, a slot may be referred to as a unit time. The unit time may be different for each cell according to numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be a processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device

## Claims

1. A terminal comprising:
a control unit configured to generate feedback information including first feedback information for control information that performs scheduling for a single downlink shared channel and second feedback information for control information that performs scheduling for a plurality of downlink shared channels; and
a transmission unit configured to transmit the feedback information in uplink.

2. The terminal as claimed in claim 1,
wherein, when scheduling based on code block group is configured in a cell, the control unit further includes, in the feedback information, third feedback information for control information in a cell in which scheduling based on code block group is not configured.

3. The terminal as claimed in claim 1 or 2,
wherein the control unit assumes that any of a plurality of pieces of control information detected in a same control channel monitoring occasion does not perform scheduling for a plurality of downlink shared channels.

4. The terminal as claimed in any one of claims 1-3,
wherein the control unit performs time domain bundling for feedback information of a plurality of downlink shared channels after performing spatial bundling for feedback information of each downlink shared channel in a plurality of downlink shared channels.

5. A base station comprising:
a transmission unit configured to transmit first control information that performs scheduling for a single downlink shared channel and second control information that performs scheduling for a plurality of downlink shared channels; and
a reception unit configured to receive feedback information, in uplink, including first feedback information for the first control information and second feedback information for the second control information.

6. A feedback method executed by a terminal, the feedback method comprising:
generating feedback information including first feedback information for control information that performs scheduling for a single downlink shared channel and second feedback information for control information that performs scheduling for a plurality of downlink shared channels; and
transmitting the feedback information in uplink.
